# EUROPEAN PATENT APPLICATION

(11) **EP 4 534 991 A1**
(43) Date of publication of application: **09.04.2025**
(21) Application number: 23201648.5
(22) Date of filing: 04.10.2023
(51) Int. Cl.: G01N 27/416, G01N 27/28, G01N 27/30

(54) **RECALIBRATABLE PH SENSOR**

(71) Applicant: Sartorius Stedim FMT, 13400 Aubagne (FR)
(72) Inventor: Gibelin, Jérémy, 83870 Signes (FR); Gombert, Marie, 13600 Ceyreste (FR)
(74) Representative: Derambure Conseil

(57) **Abstract**

The present invention relates to a recalibratable pH sensor device 20 comprising:
- a gasket 21 separating the pH sensor device 20 into a contaminated region 22 and a sterile region 23 and sealing the contaminated region 22 from the sterile region 23;
- an electrode 24 with a measuring tip;
- a measure chamber 29 having a measure inlet 30 where the measuring tip 31 of the electrode 24 is fixedly placed;
characterized in that:
- the pH sensor device 20 further comprises a switch part 25 movable relative the measure chamber 29 and having a fluid inlet 80 and having two positions: a calibration position 27 and a measure position 28;
- the switch part 25 is configured to close the measure inlet 30 of the measure chamber 29 in its calibration position 27, and open the measure inlet 30 in its measure position 28.

## Description

### Technical Field

This disclosure pertains to the field of recalibratable pH sensor device allowing a calibration of an electrode at least three times, and a method using this pH sensor device.

### Background Art

Classical pH sensor devices are well-known in the art and can be calibrated.

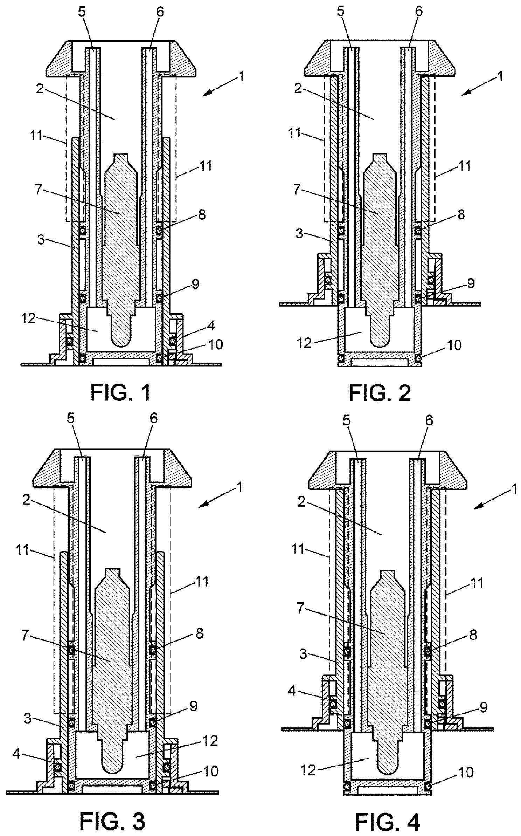

Figures 1 to 4 show an example of such pH sensor device. Such pH sensor device 1 comprises a tubular part 3, a movable tubular electrode holder 2 for receiving an electrode and translatable in and along the tubular part 3 between a calibration position and a measure position.

The tubular part 3 comprises a bag port 4 at one end thereof to be attached to a bag containing a solution, the pH of which is to be measured.

The electrode holder 2 comprises a measure chamber 12 at one of its end (tip end), an inlet 5 opening into the measure chamber 12 and through which a calibration solution can be provided, and an outlet 6 to flush this solution out of the measure chamber 12 once the electrode 7 is calibrated. When the electrode holder 2 is in its calibration position, it does not protrude out of the tubular part 3 into the bag and the measure chamber is closed by the wall of the tubular part 3. When the electrode holder 2 is in its measure position, it protrudes out of the tubular part 3 by the length of the measure chamber and the measure chamber 12 is exposed to content of the bag.

Three gaskets are provided on the outer surface of the electrode holder 2:
- a first gasket 10 is configured to prevent content of the bag from penetrating the space between the electrode holder and the tubular part when the electrode holder is in its calibration position and is located at the tip end of the electrode holder 2;
- a second gasket 9 is configured to prevent content of the bag from penetrating the space between the electrode holder and the tubular part when the electrode holder is in its measure position and is located at the other end of the measure chamber; and
- a third gasket 8 is configured to prevent contaminants of the outside environment of the pH sensor device from penetrating the space between the electrode holder and the tubular part and thus preserving sterility of the content of the bag and is located between the second gasket 9 and the other end of the electrode holder further away from the bag.

The sequence illustrated by figures 1 to 4 shows the spread of the contaminated area after two calibrations.

Figure 1 shows the pH sensor device 1 as provided unused in the calibration position. In this position, the three gaskets separate the inner surface of the tubular part 3 into three portions: an outside portion farthest away from the bag port, an intermediate portion, and an inside portion closest to the bag port. The third gasket 8 separates the pH sensor device into a contaminated part and a sterile part and in particular a contaminated area 11 between the tubular part and the electrode holder which is in direct contact with ambient air. In this case, the contaminated area 11 contains the outside portion of the tubular part 3. The pH sensor device 1 can be attached to a bag through its bag port. In this calibration position, the pH sensor device 1 can be calibrated before the pH of the solution contained in the bag can be measured. To do so, rinsing liquid is injected into the closed measure chamber through the inlet and subsequently pushed out thereof through the outlet by using a buffer solution. Once the measure chamber is filled with the buffer solution, calibration may occur. The first gasket 10 prevents the content of the bag to enter the measure chamber.

When it is desired to measure the pH of the content of the reactor, the electrode holder is pushed to its measure position represented in figure 2. The contaminated area 11 is limited by the third gasket 8 but since the electrode holder is pushed towards the bag so is the third gasket 8 and consequently, the size of the contaminated area 11 becomes larger: the intermediate portion of the tubular part 3 becomes contaminated.

At some point during use of the pH sensor device 1, it may be wished to recalibrate the device. To do so, the electrode holder is brought back to its calibration position as represented in figure 3. As the electrode holder is brought back to this position, the second gasket 9 contacts the contaminated intermediate portion of the tubular part 3 and becomes itself contaminated. Also, in this position, the portion of the outer surface of the electrode holder faces the contaminated intermediate portion so that this portion of the electrode holder also becomes contaminated. The contaminated area now extends up to the second gasket 10.

After calibration, the electrode holder 2 is pushed again into its measure position as illustrated in figure 4. The second gasket 9 contacts the inside portion of the tubular part 3 and contaminates it: the contaminated area 11 has increased up to the inside portion of the inner surface of the tubular part 3.

If another calibration was wished and were the electrode holder 2 brought back to its calibration position, then the first gasket 10 would contact the inside portion and become itself contaminated. Also, the portion of the outer surface of the electrode holder between the first and second gaskets would become contaminated. If then the electrode holder 2 were brought to its measure position, both the contaminated first gasket and the portion of the outer surface of the electrode holder between the first and second gaskets would contact the content of the bag and contaminate it.

Thus, as explained above, such pH sensor device 1 only allows two calibrations without contaminating the content of the bag due to the movements of the gaskets.

### Summary

This disclosure improves the situation.

The present invention relates to a recalibratable pH sensor device comprising:
- a gasket separating the pH sensor device into a contaminated region and a sterile region and sealing the contaminated region from the sterile region;
- an electrode with a measuring tip;
- a measure chamber having a measure inlet where the measuring tip of the electrode is fixedly placed;
characterized in that:
- the pH sensor device further comprises a switch part movable relative the measure chamber and having a fluid inlet and having two positions: a calibration position and a measure position;
- the switch part is configured to close the measure inlet of the measure chamber in its calibration position, and open the measure inlet in its measure position so that the measure inlet of the measure chamber is fluidly connected to the fluid inlet; and
- the sterile region houses the measure chamber and the switch part.

Such recalibratable pH sensor device allows to calibrate more than twice the electrode without contaminating the content of the bag. And thus, there is no risk for the user to contaminate the content of the bag by misused or error. The operating time of this pH sensor device is no more limited to two calibrations.

The switch part may be configured so that in its measure position, an aperture of the switch part may face the measure inlet of the measure chamber, and that in its calibration position, a wall of the switch part may face the measure inlet of the measure chamber.

The calibration inlet and calibration outlet of the feeding part allows to provide the calibration solution in a secure way.

The pH sensor device may comprise a guiding part configured to switch the switch part between its calibration and measure positions.

Thanks to the guiding part, no gasket is needed to delimit the contamination region and prevent it from expanding, ensuring that the measure and calibration positions stay in the sterile region.

The guiding part may be configured to transform a rotational movement into a translational movement, notably a rotational movement of the guiding part relative to the switch part into a translational movement of the switch part.

The guiding part may have an inner ramp and the switch part may have an outer companion piece cooperating with the ramp so that a rotation of the guiding part relative to the switch part may be converted into a relative translation of the switch part and the guiding part so that the switch part may be moved between its measure position and its calibration position.

The motion of the ramp relatively to the outer companion provides a secure motion in the sterile region between the measure position and the calibration position.

The companion piece may comprise two parallel ribs placed away from one another in the longitudinal direction of the switch part, thereby forming a gap having the same dimension as the width of the ramp.

Such companion piece is easy to realize and allows a cost reduction of the pH sensor device.

The guiding part may have an inner companion piece and the switch part may have an outer ramp cooperating with the companion piece so that a rotation of the guiding part relative to the switch part may be converted into a relative translation of the switch part and the guiding part so that the switch part may be moved between its measure position and its calibration position.

The motion of the ramp relatively to the outer companion provides a secure motion in the sterile region between the measure position and the calibration position.

The guiding part may comprise two parallel ribs placed away from one another in the longitudinal direction of the guiding part, thereby forming a gap having the same dimension as the width of the ramp.

The combination of the two parallel ribs with the ramp is an efficient and easy way to transform a translation movement into a rotation movement.

The guiding part may have a bag port for the fixation of the pH sensor device to a bag, the bag port being a collar extending radially outwards.

The switch part may have a general tubular shape with a first end portion free from apertures, a second middle portion comprising one or more apertures, and a third end portion free from apertures, the ramps or the companion pieces being provided in the third end portion.

The pH sensor device may comprise a feeding part in which the measure chamber may be formed and having the measure inlet, a calibration inlet and a calibration outlet.

The feeding part may have a first end portion with a general tubular shape with the measure chamber and the measure inlet, and a second end portion with a general frustoconical shape with the apex of the corresponding cone in the measure chamber and its base in the contaminated region.

The pH sensor device may comprise an electrode holder comprising the feeding part and an electrode housing part configured to support the electrode so that its tip may be fixedly placed in the measure chamber, the feeding part and the electrode housing part being two different parts or a single piece.

The present invention relates to a method of calibration of the pH sensor device of the above-mentioned type, this method comprising the steps, while the switch part may be in its calibration position:
- providing a calibration solution;
- injecting the calibration solution through the calibration inlet while the measure inlet is closed;
- immersing the tip of the electrode in the calibration solution;
- proceed to the calibration of the pH sensor device;
- flushing the calibration solution through the calibration outlet.

This method allows to calibrate n times, n being an integer of 2 or more, the pH sensor device. It is easy to operate.

The present invention relates to a use of the pH sensor device of the above-mentioned type, wherein calibration of the pH sensor device may be carried out more than twice.

### Brief Description of Drawings

Other features, details and advantages will be shown in the following detailed description and on the figures, on which:
Fig. 1 to Fig. 4 are schematic views of a pH sensor device according to the prior art and show the contaminated area during operation up to two calibrations.
Fig. 5 is a 3D exploded view of an example of pH sensor device according to the present invention.
Fig. 6 is a solid view of the assembled pH sensor device of Fig. 5.
Fig. 7 is a bottom solid view of the pH sensor device of Fig. 6.
Fig. 8 is a 3D cut view of the pH sensor device of Fig. 6 when the switch part is in its calibration position.
Fig. 9 is a 3D cut view of the pH sensor device of Fig. 6 when the switch part is in its measure position.
Fig. 10 is a 3D cut view of the electrode housing part and the electrode of the pH sensor device of Fig. 6.
Fig. 11 is a solid view of the electrode housing part of Fig. 10.
Fig. 12 is another solid view of the electrode housing part of Fig. 10.
Fig. 13 is a solid view of the feeding part of the pH sensor device of Fig. 6.
Fig. 14 is a 3D cut view of the feeding part of Fig. 13.
Fig. 15 is another solid view of the feeding part of Fig. 13.
Fig. 16 is a solid view of the guiding part of the pH sensor device of Fig. 6.
Fig. 17 is a 3D cut view of the guiding part of Fig. 16.
Fig. 18 is a solid view of the guiding part of Fig. 16 with the feeding part of Fig.13.
Fig. 19 is a solid view of the switch part of the pH sensor device of Fig. 6.
Fig. 20 is a side solid view of the switch part of the pH sensor device of Fig. 6.
Fig. 21 is another solid view of the switch part of the pH sensor device of Fig. 6.
Fig. 22 is a solid view of the outer retaining part of the pH sensor device of Fig. 6.
Fig. 23 is a 3D cut view of the outer retaining part with the guiding part of the pH sensor device of Fig. 6.
Fig. 24 is another solid view of the outer retaining part of the pH sensor device of Fig. 6.
Fig. 25 is a solid view of the outer retaining part with the guiding part and the feeding part together.
Fig. 26 is another solid view of the electrode housing part with the electrode of Fig. 10.
Fig. 27 is a 3D exploded view of the electrode housing part with the electrode.
Fig. 28 is another solid view of the electrode housing part with the electrode of Fig. 10.
Fig. 29 is a 3D exploded view of the electrode housing part with the electrode and the seal.

### Description of Embodiments

In the following, the words "outward", "inward" and their derivates are combined with "radially" and "longitudinally". With "radially", the point of reference is the longitudinal axis of the pH sensor device with "outward" and its derivates meaning "away from the longitudinal axis" and "inward" and its derivates meaning "towards the longitudinal axis". With "longitudinally", the point of reference is the bag port, with "outward" and its derivates meaning "away from the bag port" and "inward" and its derivates meaning "towards the bag port".

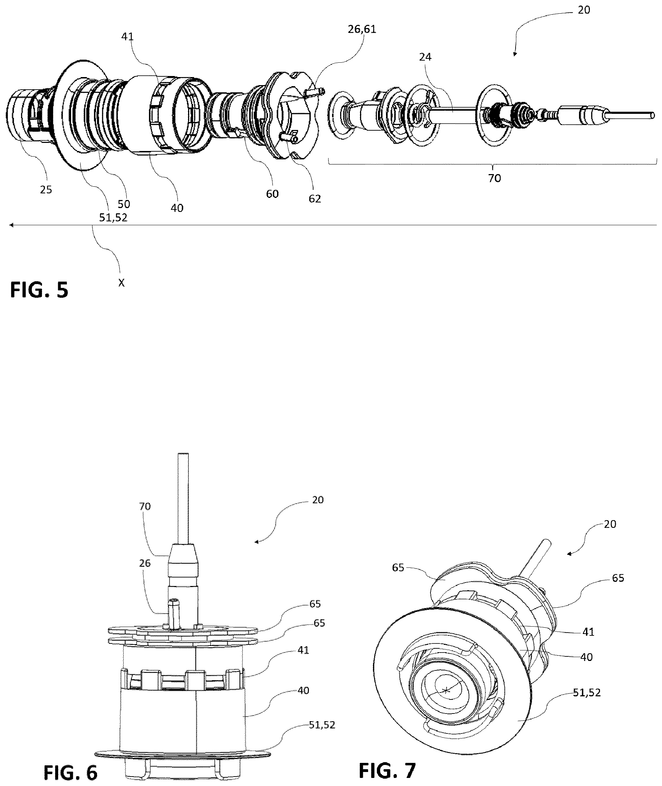

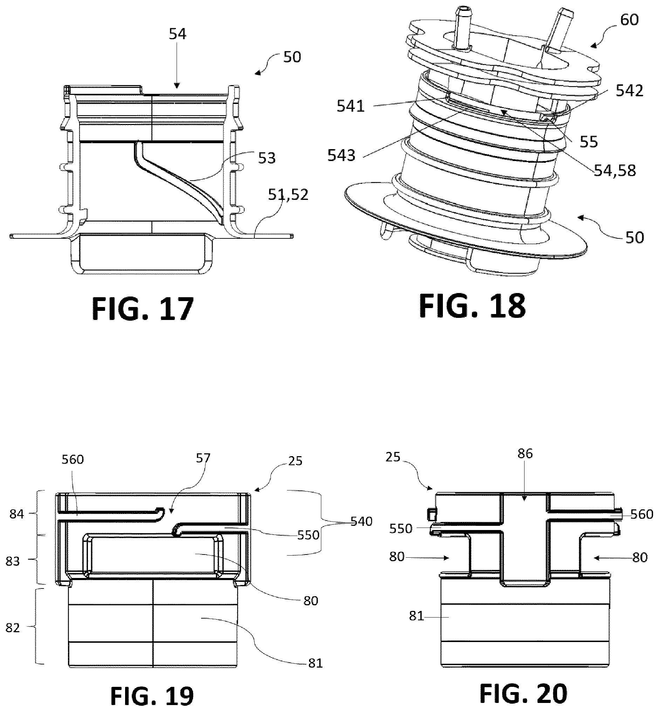

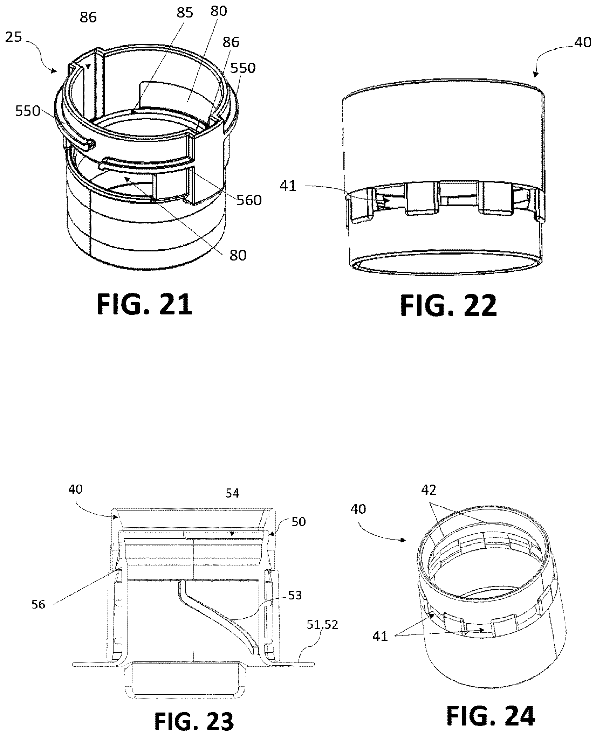

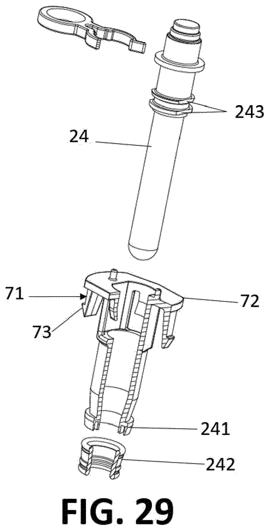

Referring to figures 5 to 29, the present invention relates to a recalibratable pH sensor device 20 comprising:
- a gasket 21 separating the pH sensor device 20 into a contaminated region 22 and a sterile region 23 and sealing the contaminated region 22 from the sterile region 23;
- an electrode 24 with a measuring tip;
- a measure chamber 29 having a measure inlet 30 where the measuring tip 31 of the electrode 24 is fixedly placed;
characterized in that:
- the pH sensor device 20 further comprises a switch part 25 movable relative the measure chamber 29 and having a fluid inlet 80 and having two positions: a calibration position 27 and a measure position 28;
- the switch part 25 is configured to close the measure inlet 30 of the measure chamber 29 in its calibration position 27, and open the measure inlet 30 in its measure position 28 so that the measure inlet 30 of the measure chamber 29 is fluidly connected to the fluid inlet 80; and
- the sterile region 23 houses the measure chamber 29 and the switch part 25.

The contaminated region 22 refers to a non-aseptic region in contact with ambient air. By contrast, the sterile region 23 refers to an aseptic region with inside surfaces having no contact with ambient air. Due to the fact that any moving parts are provided in the sterile region 23, the extend of the contaminated region 22 does not increase.

The electrode 24 has a longitudinal axis X corresponding to the longitudinal axis of the pH sensor device 20. The electrode 24 may be received by an electrode housing part 70 configured to received and maintained the electrode 24 so that it tip remains in the measure chamber.

The pH sensor device 20 may be sterilized using gamma rays.

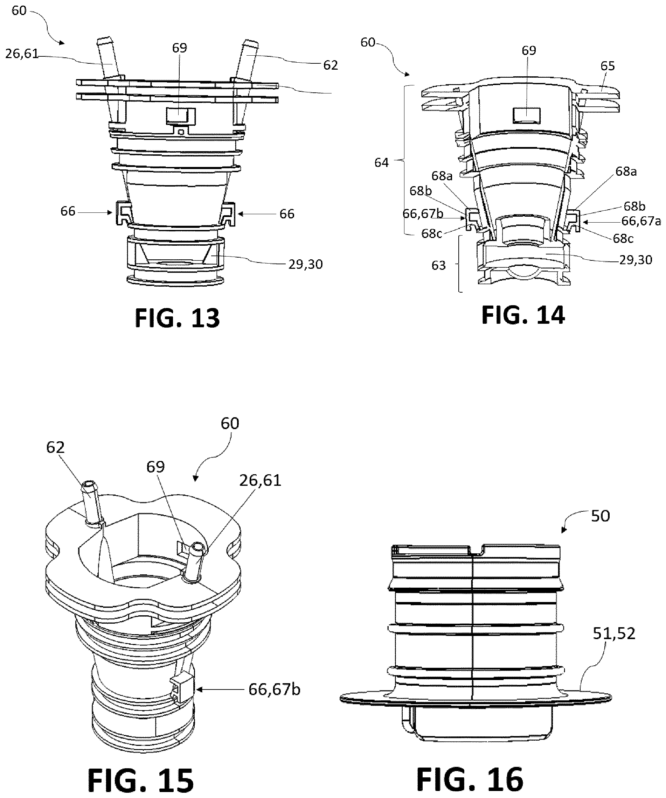

The switch part 25, represented in figure 16, may have a general tubular shape having a wall 81 with an aperture 80. The switch part 25 may be configured so that in its measure position 28, the aperture 80 may face the measure inlet 30 of the measure chamber 29; and in its calibration position 27, the wall may face the measure inlet 30 of the measure chamber 29.

The measure chamber 29 may have n measure inlets (not represented), n being an integer equal to 2 or more, and the switch part 25 may have n apertures (not represented). The measure inlets and apertures are placed at corresponding locations so that all apertures face their corresponding measure inlets in the measure position of the switch part and so that all measure inlets face corresponding wall portions of the switch part. The measure inlets may be angularly spaced from one another, for example by (360/n)°; and the apertures may likewise be angularly spaced from one another, for example by (360/n)°.

The switch part 25 may have a general tubular shape with a first end portion 82 free from apertures, a second middle portion 83 comprising one or more apertures, and a third end portion 84 free from apertures.

Preferably, the switch part 25 and the electrode 24 are configured to be angularly fixed to one another. A slight play may however exist between these parts.

The pH sensor device 20 may comprise an electrode holder receiving the electrode 24 comprising the measure chamber. The electrode holder may be divided into a feeding part 60 and an electrode housing part 70.

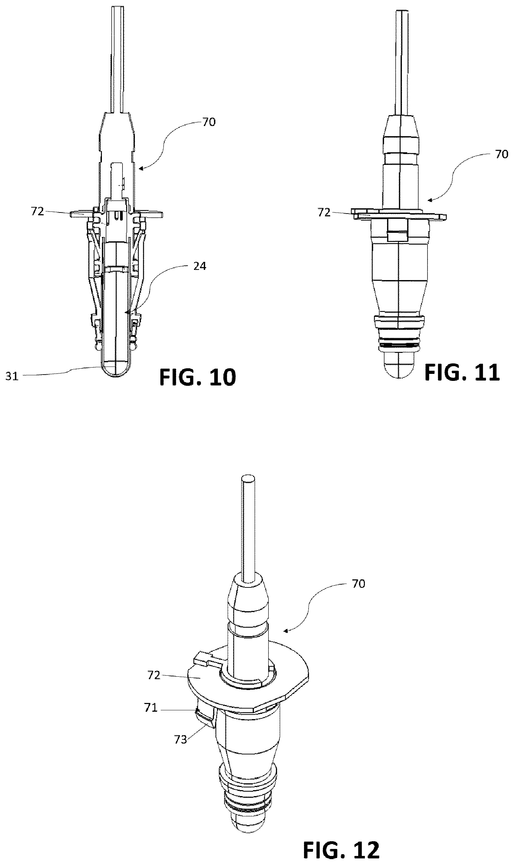

The feeding part 60, represented in figures 12 and 13, may have a first end portion 63 with a general tubular shape with the measure chamber 29 and the measure inlet 30, and a second end portion 64 with a general frustoconical shape with the apex of the corresponding cone in the measure chamber 29 and its base in the contaminated region 22. The angle at the apex of the general conical shape may be 20° to 30°, preferably 25°. The calibration inlet 61 of the feeding part may be a tube (inlet tube) extending along the side wall of the general conical shape. The inlet tube may have one end opening into the measure chamber 29 and the other end having a tube connector. The calibration outlet 62 of the feeding part may be a tube (outlet tube) extending along the side wall of the general conical shape. The outlet tube may have one end opening into the measure chamber 29 and the other end having a tube connector. The inlet tube and the outlet tube may face radially each other.

The feeding part 60 may have a flange 65 at its end farther away from the measure chamber 29 extending radially outwards. The flange 65 may have a cruciform cross section. In some cases, two superimposed flanges 65 may be provided. The flange 65 may act as a handle for actuating the pH sensor device 1.

The feeding part 60 may comprise a coupler 66 configured to guide in translation the switch part 25. The same coupler 66 may be configured to prevent rotation of the switch part 25 relative to the feeding part 66 so that the switch part 25 and the electrode 24 are angularly fixed to each other. In such case, the switch part 25 also comprise a corresponding coupler 86. The coupler 66 may be one or more sliders, for example a first slider 67a and a second slider 67b, while the switch part 25 may comprise corresponding rails 86 receiving the sliders 67a, 67b. The number of sliders may be more than 2. In such case, they may be radially spaced apart from one another, preferably at equal angular distances. Each slider may be a protrusion. An example of such protrusion comprises a first portion 68a radially outwardly extending from a lateral wall of the feeding part 60, a second portion 68b longitudinally inwardly extending from the first portion 68a and a stop element 68c extending between the outer wall of the feeding part 60 and the second portion 68b. Each rail of the switch part 25 may longitudinally extend on the inner wall of the switch part 25 for example from the third end portion 84 to the second middle portion 83. This rail 86 may be a groove with a thickness extending radially outwards from the outer surface of the lateral wall of the switch part 25.

The feeding part 60 and the electrode housing part 70 may be configured to enable mounting of the electrode housing part 70 on the feeding part 60 through insertion of the electrode housing part 70 inside the feeding part 60 along the longitudinal axis of the pH sensor device. The feeding part 60 may comprise a opening 69 to fasten the electrode housing part 70, thereby preventing movement of the electrode housing part 70 in a direction opposite the insertion direction. Thus, the electrode housing part 70 may comprise a corresponding fastener 73.

The opening 69 of the feeding part 60 and the fastener 73 of the electrode housing part 70 may form a snap-fit joint. For example, the opening 69 of the feeding part 60 may be an opening in the lateral wall of the feeding part 60 and the fastener 73 of the electrode housing part 70 may be a hook configured to be snap-fitted into the opening. The opening 69 may be located in the upper part of the feeding part 60 and the hook in a corresponding location on the electrode housing part 70. This opening 69 may have a general rectangular shape.

The electrode housing part 70 may comprise a radially outwardly extending plate 72. Said hook 73 may be attached to said plate 72 through a beam 71 extending longitudinally inward. The electrode housing part 70 may comprise an annular housing 241 to hold a seal 242 between the electrode 24 and the feeding part 60. The seal 242 may have a shape which is a solid of revolution. The seal 242 ensures that the contaminated region 22 does not spread until the tip of the electrode 31. The electrode 24 may comprise an anti-rotation system 243 capable of blocking rotation of said electrode 24 around its longitudinal axis. This anti-rotation system 243 may be of a shape complementary type or a snap-fit type. For example, the anti-rotation system 243 may comprise one or more flat spots on the otherwise cylindrical outer surface of the electrode 24. A corresponding anti-rotation system is then provided on the electrode housing part, for example a hole with a shape which is complementary to the shape of the cross-section of the electrode 24 where the one or more flat spots are. In another example, the anti-rotation system 243 may have snap-fitting flanges extending from the outer surface of the electrodes at a sharp angle and extending longitudinally outwards. The electrode 24 may comprise a plurality of guide elements configured to facilitate insertion of said electrode 24 into the electrode housing part 70.

The feeding part 60 and the electrode housing part 70 may be two different parts or a single piece.

The pH sensor device 20 may comprise a guiding part 50 configured to switch the switch part 25 between its measure position and calibration position. The guiding part 50 may be configured to transform a rotational movement into a translational movement, notably a rotational movement of the guiding part 50 relative to the switch part into a translational movement of the switch part 25.

The guiding part 50 may have an inner ramp 53 and the switch part 25 may have an outer companion piece 540 cooperating with the ramp 53 so that a rotation of the guiding part 50 relative to the switch part 25 is converted into a relative translation of the switch part 25 and the guiding part 50 so that the switch part 25 may be moved between its measure position 28 and its calibration position 27. In general, the ramp 53 may be configured to allow the switch part 25 to translate over a distance of 10 mm to 30 mm, preferably 14 mm to 19 mm, more preferably 18,5 mm, while it is rotated by an angle of 20° to 180°, preferably an angle of 60° to 120°. The inner ramp 53 may be helix-shaped like a thread. For example, the inner ramp 53 is a rib formed on the inner surface of the guiding part 50 and the companion piece may be two protrusions on the outer surface of the switch part 50 and spaced apart to form a gap 57 and so that they are placed closely to and on both side of the rib. The companion piece 540 may comprise two parallel ribs 550, 560 placed away from one another in the longitudinal direction of the switch part 25, thereby forming a gap 57 having the same dimension as the width of the ramp 53.

Alternatively, the inner ramp 53 may be a groove formed on the inner surface of the guiding part 50 and the companion piece 550,560 is a protrusion on the outer surface of the switch part 50 and which is received in the groove.

The number of ramps and companion piece is not limited to 1. When the number is more than one, the ramps and companion pieces are preferably angularly spaced apart from one another, preferably still regularly spaced. For example, the guiding part 50 may have n ramps 53, n being two or more, and the switch part 25 may have n outer companion pieces 540, wherein the ramps 53 may be angularly spaced from one another by (360/n)° and the companion pieces 540 may be angularly spaced from one another by (360/n)°.

The locations of ramp(s) and companion piece(s) may be swapped between the guiding part 50 and the switch part 25.

The guiding part 50 may have a bag port 51 for the fixation of the pH sensor device to a bag. The bag port may be a collar 52 extending radially outwards.

The pH sensor device 20 may comprise a limiter 54 to limit the rotation of the electrode holder when the electrode holder is made to be angularly fixed to the switch part 25. The limiter 54 may be provided on the guiding part 50. This limiter 54 typically has two stops 541, 542 and a track 543 therebetween. The track may be a notch in the upper part 58 of the guiding part 50, more particularly at the radially outer end of the guiding part 50. However, the track may also be provided in a different form such as a groove. The guiding part 50 may comprise two limiters 54. The guiding part may comprise n stroke limiters 54, n being an integer egal to 2 or more. The stroke limiters 54 may be angularly spaced from one another, for example by 360/n°.

To cooperate with the limiter 54, the pH sensor device 20 may have a slider 55. The slider may be formed on the feeding part 60, for example to move in the track 543 between both stops 541, 542. In operation, when the electrode holder rotates, the slider 55 of the electrode holder slides along the limiter 54. Therefore, the rotation of the electrode holder is limited between two angles corresponding to the positions of the slider 55 against each one of the stops 541, 542. The pH sensor device 20 may comprise an outer retaining part 40. The outer retaining part 40 maintain the feeding part 60 and the guiding part 50 together, notably fixed to one another. The outer retaining part 40 preferably has a general cylindrical shape. The retaining part 40 may comprise an inward stop for preventing the guiding part 50 from separating from the feeding part 60 in the longitudinally inward direction. For example, the inward stop 41 is a sill 41 provided on the inner surface thereof. In such case, the guiding part 50 may comprise a supporting surface 56 configured to rest against the sills 41 of the outer retaining part 40. This supporting surface 56 may be an annular bulge, for example with a triangular cross section, resting on the sills 41, for example with a triangular cross section.

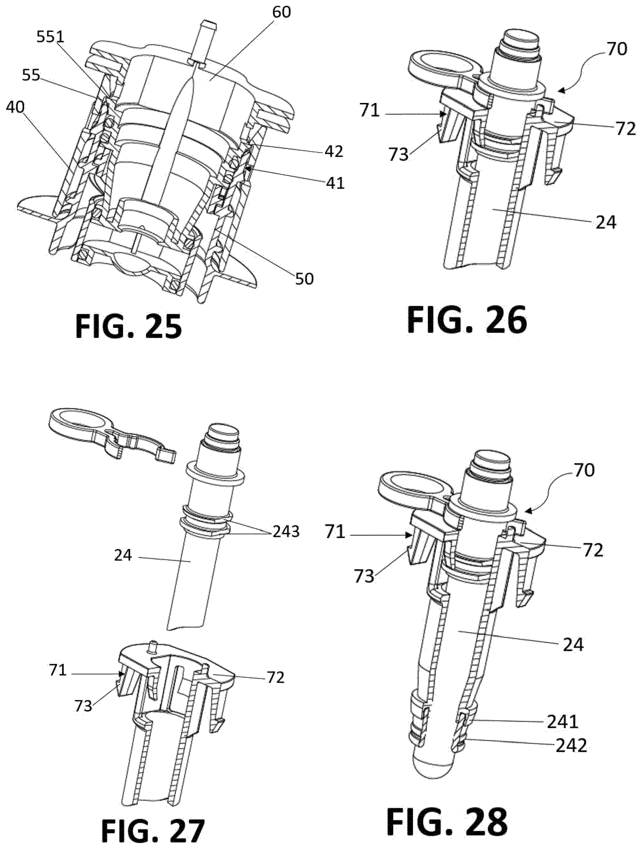

The outer retaining part 40 may further comprise an outward stop 42 for preventing the feeding part 60 from separating from the guiding part 50 in the longitudinally outward direction. For example, the outward stop is a snap-fit hook, preferably an annular snap-fit hook at one end of the outer retaining part with a general cylindrical shape. The snap-fit hook may cooperate with a supporting surface of the feeding part 60. In one embodiment, this support surface may be a surface 551 of the slider 55. As illustrated in figure 25, the outer retaining part 40 may rest on an edge surface 551 of the slider 55 to maintain functional clearance. A gap may be provided between the edge surface 551 of the slider 55 and the snap-fit hook of the outer retaining part 40. Thus, the slider 55 may have two functions: to delimit rotation and to prevent translation by retaining and preventing the feeding part 60 from separating from the guiding part 50.

The outward stop 42 may also cooperate with the upper part 58 of the guiding part 50 on one or both sides of the limiter 54 to hold the guiding part 50 fixed to the outer retaining part 40.

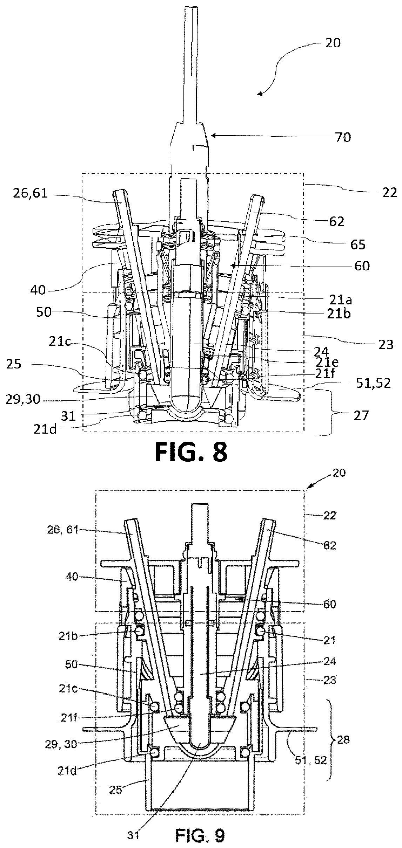

Referring to figures 8 and 9, the gasket 21a separating the pH sensor device 20 into a contaminated region 22 and a sterile region 23 called the first 21 gasket may be located between the guiding part 50 and the electrode housing part 70 so that contaminant cannot enter the sterile region through the space between these parts 50, 70.

A second gasket 21b may be provided adjacent to the first gasket 21a but closer to the bag port. The second gasket 21b acts as a security gasket to strengthen sealed separation of the contaminated region and the sterile region.

Two gaskets 21c, 21d may be provided to fluidly isolate the measure chamber 29 from content of the bag when the pH sensor device is in its calibration position. They are typically positioned at both ends of the measure chamber 29 in the longitudinal direction.

When the electrode holder is formed in two separate parts, one or two gaskets 21e, 21f may be provided to prevent contaminant from entering and liquid from leaking out of the measure chamber 29 through the space between these two parts.

The sequence illustrated by figures 8 and 9 shows the non-spread of the contaminated area after calibrations.

Figure 8 shows the pH sensor device 20 in the calibration position 27. In this position, the wall of the switch part faces the measure inlet 30 of the measure chamber 29, thus, the content of the bag cannot enter the measure chamber 29, which is ready for receiving the calibration solution. Also, in this position, the contaminated part is limited by the first gasket 21.

Figure 9 shows the pH sensor device 20 in the measure position 28. In this position, the aperture 80 faces the measure inlet 30 of the measure chamber 29, thus, enabling the content of the bag to enter into the measure chamber 29. Like in the calibration position, the contaminated part is limited by the first gasket 21.

To move from the calibration position 27 to the measure position 28, the user actuates the flange 65 of the electrode holder (by rotating the latter) while holding the outer retaining part 40 thereby rotating and translating the switch part 25 relative to the guiding part 50. Since the electrode holder is fixed in rotation with the switch part 25, the switch part 25 follows the electrode holder in rotation. The rotation of electrode holder is limited by the limiter 54. During rotation, the inner ramp 53 of the guiding part 50 forces the companion piece 540 of the switch part 25 in the longitudinal direction toward the bag port 51 thereby forcing the switch part 25 in translation. The translation of the switch part 25 is guided by the translation guide 86 of the switch part 25. At the same time, the aperture 80 of the switch part 25 aligns with the measure inlet 30. Thus, the content of the bag may flow into the measure chamber 29. Also, during the rotation, there is no part of the pH sensor device which moves from the contaminated region to the sterile region, thus keeping these two regions separated: contamination does not spread down to the sterile region.

When it is desired to calibrate again, the user actuates the flange 65 of the electrode holder (by rotating the latter but this time in the opposite angular direction) while holding the outer retaining part 40 resulting in a rotation and a translation of the switch part 25 relative to the guiding part 50. Since the electrode holder is fixed in rotation with the switch part 25, the switch part 25 follows the electrode holder in rotation. The rotation of the electrode holder is again limited by the limiter 54. During rotation, the inner ramp 53 of the guiding part 50 forces the companion piece 540 of the switch part 25 in the longitudinal direction away from the bag port 51 thereby forcing the switch part 25 in translation. At the same time, the measure inlet 30 is closed by the wall of the switch part 25, thus isolating the measure chambre 29 from the content of the bag. Again, during the rotation, no part of the pH sensor device moves from the sterile region to the contaminated region and from the contaminated region to the sterile region, thus keeping these two regions separated: again contamination does not spread down to the sterile region.

The present invention concerns a method of calibration of the pH sensor device as described above, this method comprising the steps, while the switch part 25 is in its calibration position:
- providing a calibration solution;
- injecting the calibration solution through the calibration inlet 61 while the measure inlet 30 is closed thus immersing the tip of the electrode 24 in the calibration solution;
- proceed to the calibration of the pH sensor device;
- flushing the calibration solution through the calibration outlet 62.

The switch part 25 may be already in its calibration position (which is generally the case when the pH sensor device is new) or brought into this position for example by actuating the feeding part.

The present invention relates to a use of the pH sensor device of the above-mentioned type wherein calibration of the pH sensor device is carried out more than twice.

## Claims

1. A recalibratable pH sensor device (20) comprising:
- a gasket (21a) separating the pH sensor device (20) into a contaminated region (22) and a sterile region (23) and sealing the contaminated region (22) from the sterile region (23);
- an electrode (24) with a measuring tip;
- a measure chamber (29) having a measure inlet (30) where the measuring tip (31) of the electrode (24) is fixedly placed;
**characterized in that**:
- the pH sensor device (20) further comprises a switch part (25) movable relative the measure chamber (29) and having a fluid inlet (80) and having two positions: a calibration position (27) and a measure position (28);
- the switch part (25) is configured to close the measure inlet (30) of the measure chamber (29) in its calibration position (27), and open the measure inlet (30) in its measure position (28) so that the measure inlet (30) of the measure chamber (29) is fluidly connected to the fluid inlet (80); and
- the sterile region (23) houses the measure chamber (29) and the switch part (25).

2. The recalibratable pH sensor device according to claim 1, wherein the switch part (25) is configured so that in its measure position (28), an aperture (80) of the switch part (25) faces the measure inlet (30) of the measure chamber (29), and that in its calibration position (27), a wall (81) of the switch part faces the measure inlet (30) of the measure chamber (29).

3. The recalibratable pH sensor device (20) according to one of the preceding claims, wherein the pH sensor device (20) comprises a guiding part (50) configured to switch the switch part (25) between its calibration and measure positions (27, 28).

4. The recalibratable pH sensor device (20) according to claim 3, wherein the guiding part (50) is configured to transform a rotational movement into a translational movement, notably a rotational movement of the guiding part (50) relative to the switch part into a translational movement of the switch part (25).

5. The recalibratable pH sensor device according to claim 3 or claim 4, wherein the guiding part (50) has an inner ramp (53) and the switch part (25) has an outer companion piece (540) cooperating with the ramp (53) so that a rotation of the guiding part (50) relative to the switch part is converted into a relative translation of the switch part (25) and the guiding part so that the switch part is moved between its measure position (28) and its calibration position (27).

6. The recalibratable pH sensor device according to claim 5, wherein the companion piece (540) comprises two parallel ribs (550,560) placed away from one another in the longitudinal direction of the switch part (25), thereby forming a gap (57) having the same dimension as the width of the ramp (53).

7. The recalibratable pH sensor device according to claim 3 or claim 4, wherein the guiding part (50) has an inner companion piece and the switch part (25) has an outer ramp cooperating with the companion piece so that a rotation of the guiding part (50) relative to the switch part is converted into a relative translation of the switch part (25) and the guiding part so that the switch part is moved between its measure position (28) and its calibration position (27).

8. The recalibratable pH sensor device according to claim 7, wherein the guiding part (50) comprises two parallel ribs placed away from one another in the longitudinal direction of the guiding part (50), thereby forming a gap having the same dimension as the width of the ramp.

9. The recalibratable pH sensor device according to one of the preceding claims, wherein the guiding part (50) has a bag port (51) for the fixation of the pH sensor device to a bag, the bag port (51) being a collar (52) extending radially outwards.

10. The recalibratable pH sensor device according to one of the claims 5 to 8, wherein the switch part (25) has a general tubular shape with a first end portion (82) free from apertures, a second middle portion (83) comprising one or more apertures, and a third end portion (84) free from apertures, the ramps or the companion pieces (540) being provided in the third end portion (84).

11. The recalibratable pH sensor device (20) according to one of the preceding claims, wherein the pH sensor device (20) comprises a feeding part (60) in which the measure chamber (29) is formed and having the measure inlet, a calibration inlet (61) and a calibration outlet (62).

12. The recalibratable pH sensor device according to claim 10, wherein the feeding part (60) has a first end portion (63) with a general tubular shape with the measure chamber (29) and the measure inlet (30), and a second end portion (64) with a general frustoconical shape with the apex of the corresponding cone in the measure chamber (29) and its base in the contaminated region (22).

13. The recalibratable pH sensor device according to claim 10 or 11, wherein the pH sensor device (20) comprises an electrode holder comprising the feeding part and an electrode housing part configured to support the electrode (24) so that its tip (31) is fixedly placed in the measure chamber (29), the feeding part and the electrode housing part being two different parts or a single piece.

14. Method of calibration of the pH sensor device according to one of the claims 1 to 13, this method comprising the steps, while the switch part (25) is in its calibration position:
- providing a calibration solution;
- injecting the calibration solution through the calibration inlet (61) while the measure inlet (30) is closed;
- immersing the tip of the electrode (24) in the calibration solution;
- proceed to the calibration of the pH sensor device;
- flushing the calibration solution through the calibration outlet (62).

15. Use of the pH sensor device according to claims 1 to 13, wherein calibration of the pH sensor device is carried out more than twice.
